# EUROPÄISCHE PATENTSCHRIFT

(11) **EP 1 445 507 B1**
(45) Veröffentlichungstag und Bekanntmachung des Hinweises auf die Patenterteilung: **15.03.2006**
(21) Anmeldenummer: 03026453.5
(22) Anmeldetag: 20.11.2003
(51) Int. Cl.: F16D 65/12

(54) **Innenbelüftete Bremsscheibe mit gekrümmten Kühlluftkanälen**
Internally ventilated brake disc with curved cooling channels
Disque de frein à ventilation interne avec canaux refroidissement courbes

(30) Priorität: 04.02.2003 DE 10304299
(43) Veröffentlichungstag der Anmeldung: 11.08.2004
(73) Patentinhaber: Dr.Ing. h.c. F. Porsche Aktiengesellschaft, 70435 Stuttgart (DE)
(72) Erfinder: Prahst, Alexander, 73061 Ebersbach (DE)

(56) Entgegenhaltungen:
- EP-A- 0 717 214
- EP-A- 1 079 135
- US-A- 3 298 476
- US-A- 5 427 212
- US-A1- 2001 002 638

## Beschreibung

Die Erfindung betrifft eine innenbelüftete Bremsscheibe nach dem Oberbegriff des Patentanspruches 1.

Innenbelüftete Bremsscheiben mit gekrümmten Kühlluftkanälen sind bereits bekannt. So zeigt die FR-PS 11 80 373 eine innenbelüftete Bremsscheibe für eine Retarder - Bremse mit schaufelartig gekrümmten Kühlluftkanälen. Aus der DE 22 57 176 C3 ist eine Bremsscheibe für eine Reibungsbremse bekannt, die ebenfalls gekrümmte Kühlluftkanäle aufweist. Zusätzlich sind hier in den Reibscheiben Perforationen zur Verbesserung der Bremswirkung bei Nässe und einer verbesserten Kühlwirkung vorgesehen.

Die US 5,427,212 A offenbart eine innenbelüftete Bremsscheibe, bei der Lüftungskanäle abwechselnd von langen und kurzen bogenförmigen Rippen gebildet werden. Die in Strömungsrichtung gesehen vorderen Stirnflächen der Rippen sind um ca. 45° entgegen der Drehrichtung geneigt, um einen möglichst wirbelfreien Einlauf der einströmenden Luft zu erreichen. Die hinteren Stirnflächen hingegen sind im wesentlichen radial ausgerichtet oder können um einen kleinen negativen oder positiven Winkel zur radialen Erstreckung der Bremsscheibe geneigt sein.

Die US 3,295,476 A zeigt hingegen eine Bremsscheibe, bei der durch unterschiedliche Teilungen der Rippen (d.h. durch unterschiedliche Winkelabstände zwischen den Rippen) ein Quietschen der Bremsscheibe vermieden werden soll. Die Gestaltung der Rippen, insbesondere der Ein- und Austrittswinkel, wird nicht betrachtet.

Ausgehend von diesem Stand der Technik ist es Aufgabe der Erfindung, eine innenbelüftete Bremsscheibe zu schaffen, die im Hinblick auf den Luftdurchsatz zur Bremsscheibenkühlung und die Festigkeit der Bremsscheibe verbessert ist.

Diese Aufgabe wird mit den Merkmalen des Patentanspruches 1 gelöst. Erfindungsgemäß wird vorgeschlagen, bei einer Bremsscheibe, die aus zwei über Stege miteinander verbundenen Reibringen besteht, die gekrümmt verlaufenden Stege so auszuführen, dass sie am äußeren Umfang der Bremsscheibe im wesentlichen radial ausgerichtet sind, während sie am inneren Umfang der Bremsscheibe, d. h. im Bereich des Kühllufteintrittes, um einen Winkel von 20° bis 70° gegenüber einer an diesem Punkt des inneren Umfanges angelegten Tangente entgegen der Drehrichtung der Bremsscheibe geneigt sind. Ein bevorzugter Bereich für den Winkel an der Eintrittsseite beträgt 30° bis 60° zur Tangente.

Der Erfindung liegt die Erkenntnis zu Grunde, dass ein radial ausgerichteter Steg im Vergleich zu anders ausgerichteten Stegen die höchste Festigkeit aufweist. Da diese Maßnahme im Bereich des äußeren Umfanges der Bremsscheibe angewandt wird, der durch die Rotation der Bremsscheibe in besonderem Maße belastet ist, ist die Wirkung dieser festigkeitserhöhenden Maßnahme besonders groß.

Darüber hinaus ist mit einem radial auslaufenden Steg in vorteilhafter Weise die größte statische Druckerhöhung über einen zwischen den Stegen gebildeten Kühlkanal erzielbar. Eine große statische Druckerhöhung ist eine Voraussetzung, um einen möglichst hohen Luftdurchsatz zur Bremsscheibenkühlung zu schaffen.

Der Eintrittswinkel, d. h. der Winkel des zum inneren Umfang der Bremsscheibe weisenden Endbereiches der Stege, ist so gewählt, dass die anfängliche Richtung des Steges möglicht gut mit der Richtung der anströmenden Kühlluft übereinstimmt, um so einen möglichst hohen Luftdurchsatz zu erzielen.

Vorteilhafte Weiterbildungen der Erfindung sind in den Unteransprüchen beschrieben.

So wird vorgeschlagen, einen Teil der Stege als sog. primäre Stege auszubilden, wobei diese primären Stege an ihrem den inneren Umfang der Bremsscheibe zugewandten Endbereich Befestigungsaugen bilden. Diese Befestigungsaugen dienen zur Aufnahme vom Befestigungsmitteln wie beispielsweise Schraubverbindungen zur Verbindung der Bremsscheibe mit einem Bremstopf, einem Radlager o. ä. Sekundäre Stege sind zwischen den primären Stegen angeordnet und dienen vor allem der Luftführung und der gegenseitigen Abstützung der beiden Reibringe. Ihr dem inneren Umfang der Bremsscheibe zugewandter Endbereich ist gegenüber dem Endbereich der primären Stege zurückversetzt, um die am inneren Umfang der Bremsscheibe zur Verfügung stehende Querschnittsfläche zum Eintritt der Kühlluft möglichst groß zu halten.

Weiterhin wird vorgeschlagen, die Überdeckung der Stege in radialer Richtung der Bremsscheibe durch Wahl der Parameter
- Anzahl der Stege (vor allem primäre und sekundäre Stege),
- Wahl des Eintrittswinkel des Stege und
- Wahl der Breite der Stege
sicherzustellen.

Ferner können tertiäre Stege vorgesehen sein, die insbesondere in dem zum äußeren Umfang weisenden Bereich der Bremsscheibe angeordnet sind. Ihr dem inneren Umfang der Bremsscheibe zugewandter Endbereich ist gegenüber dem Endbereich der sekundären Stege zurückversetzt, um die in den Luftkanäle zur Verfügung stehende Querschnittsfläche nicht zu beeinträchtigen. Mit den tertiären Stegen ist die axiale Abstützung der Reibringe weiter verbessert und auf diese Weise die Durchbiegung der Reibringe unter den Kräften, die durch die Bremsbeläge während des Bremsvorganges axial auf die Bremsscheibe aufgebracht werden, vermindert.

Darüber hinaus können nach Bedarf noch weitere Stege vorgesehen sein. Ein solcher Bedarf liegt insbesondere dann vor, wenn die axiale Abstützung der Reibringe weiter verbessert werden soll. Auch kann mit Hilfe weiterer Stege die zur Kühlung wirksame Oberfläche in den Luftkanäle erhöht werden; in diesem Fall können an Stelle weiterer Stege auch Rippen vorgesehen sein, die von den Innenseiten der Reibringe in die Luftkanäle reichen.

Soweit in den Reibringen Perforationsbohrungen vorgesehen sind, sind diese in ein oder zwei Reihen in etwa parallel zu den Stegen innerhalb der Luftkanäle angeordnet. Die Perforationsbohrungen sind dabei vorzugsweise entfernt von der in Drehrichtung der Bremsscheibe weisenden Flanke der Stege angeordnet, da an dieser Flanke in Umfangsrichtung gesehen jeweils die höchste Druckerhöhung im Luftkanal stattfindet, die durch Perforationsbohrungen nicht beeinträchtigt werden soll. Ferner sind vorzugsweise im Bereich der größten statischen Lasten in den Reibringen, d.h. in der Nähe des inneren Umfanges der Bremsscheibe, im Luftkanal keine Perforationsbohrung mehr angeordnet. Durch diese Maßnahme kann die Rissgefahr in diesem besonders beanspruchten Bereich vermindert werden.

Speziell für Bremsscheiben aus einem faserverstärkten Verbundwerkstoff, beispielsweise aus siliziuminfiltriertem kohlefaserverstärktem Kohlenstoff C/CSiC (vgl. DE 44 38 455), wird vorgeschlagen, aus Festigkeitsgründen die Wandstärke der Stege mit mind. 10 mm zu wählen und die Befestigungsaugen der Stege so zu gestalten, dass der Außendurchmesser der Befestigungsaugen wenigstens doppelt so groß wie dessen Innendurchmesser ist. Dies trägt zur verbesserten Festigkeit der Bremsscheibe und zur verbesserten Festigkeit der Anbindung der Bremsscheibe bei.

Die vorstehend beschriebenen Konstruktionsprinzipien sind für innenbelüftete Bremsscheiben im allgemeinen unabhängig von deren Bauart anwendbar. Sie gelten somit insbesondere für ein- und zweiteilig aufgebaute Bremsscheiben und - mit Ausnahme des Patentanspruches 6 - für alle Materialien, insbesondere für Grauguss und Verbundkeramik wie z.B. C/CSiC.

Die Erfindung ist nachstehend anhand eines in den Figuren dargestellten Ausführungsbeispiels näher erläutert.

Es zeigen:
- Fig. 1: eine Schrägansicht auf eine innerbelüftete Bremsscheibe, mit teilweise aufgebrochener Darstellung,
- Fig. 2: eine Teilansicht der Bremsscheibe, mit teilweise aufgebrochener Darstellung,
- Fig. 3: einen Schnitt nach der Linie III - III der Fig. 2 und,
- Fig. 4: die Teilansicht nach Fig. 2 mit Winkelangaben, und
- Fig. 5: die Teilansicht nach Fig. 2 mit Angaben zur Überdeckung.

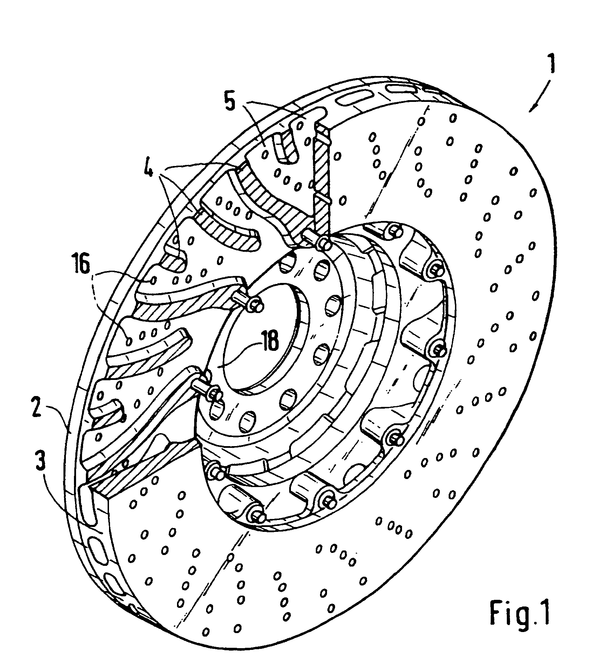

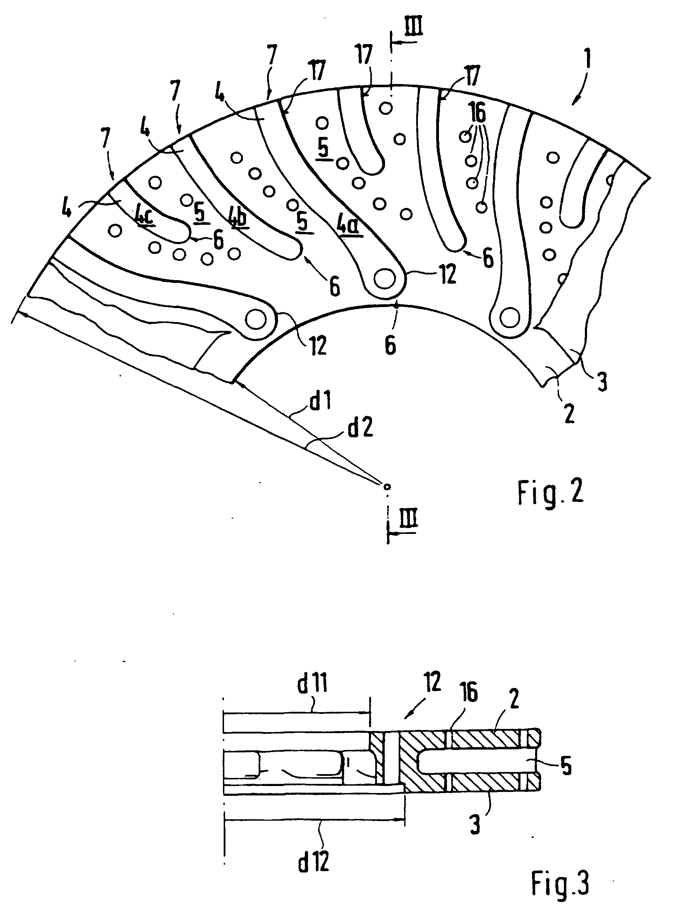

Fig. 1 zeigt in einer Schrägansicht eine innenbelüfteten Bremsscheibe 1, die in einem Teilbereich aufgebrochen dargestellt ist. Zwischen zwei Reibringen 2, 3 mit planparallelen AuBenflächen sind im folgenden als Schaufeln bezeichnete Stege 4 angeordnet, zwischen denen Luftkanäle 5 zur Führung von Kühlluft gebildet sind. Neben Primärschaufeln 4a sind Sekundärschaufeln 4b und Tertiärschaufeln 4c vorgesehen. Die Primärschaufeln 4a verlaufen S - förmig gekrümmt zwischen einem Schaufelanfang 6 am Innendurchmesser d1 der Bremsscheibe 1 und einem Schaufelende 7 am Außendurchmesser d2 der Bremsscheibe 1. In der Teilansicht nach Fig. 2 ist ein Ausschnitt der Bremsscheibe 1 nochmals in aufgebrochener Darstellung gezeigt.

Fig. 3 zeigt einen Schnitt nach der Linie lll - lll der Fig.2. Hier ist erkennbar, dass die Reibringe 2, 3 unterschiedliche Innendurchmesser d11 und d12 aufweisen, was im Ausführungsbeispiel zu einer Vergrößerung der Fläche der Luftkanäle 5 im Eintrittsbereich der Luftströmung führt.

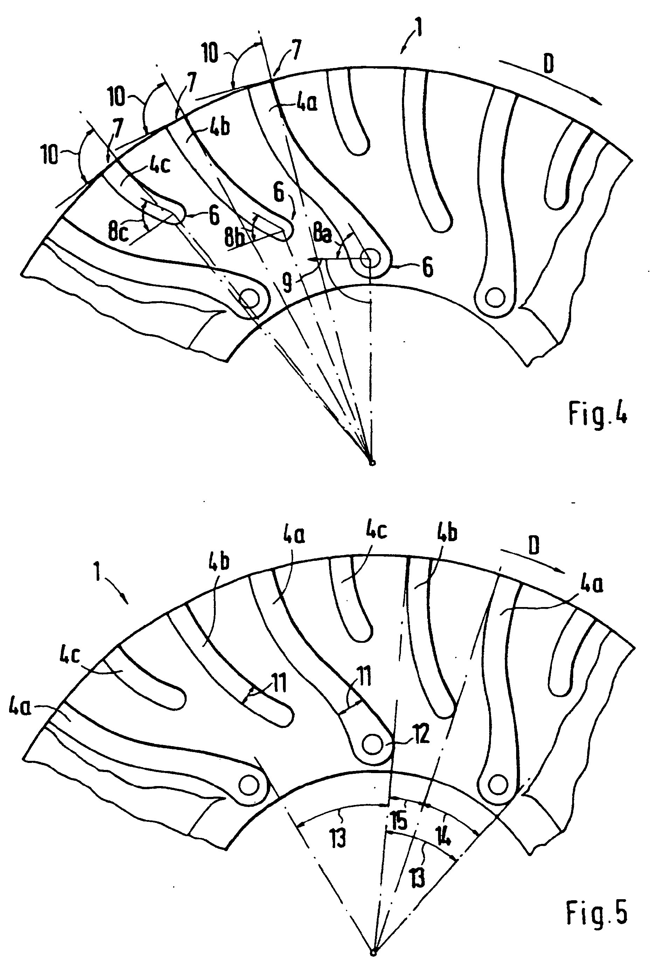

Fig. 4 zeigt in der Darstellung nach Fig. 2 die verschiedenen, für die Anordnung der Schaufeln 4 relevanten Winkel. Die Drehrichtung der Bremsscheibe 1 ist hierbei mit D angegeben. Alle Winkelangaben sind jeweils auf eine Tangente (z.B. Tangentenstrahl 9) entgegen der Drehrichtung D bezogen. Der Schaufelendwinkel 10 beträgt für alle Schaufeln 4 einheitlich 90°, d. h. die Schaufelenden 7 sind einheitlich radial ausgerichtet. Die Schaufelanfangswinkel 8 sind wie folgt gewählt:
- Für die Primärschaufeln 4a: Schaufelanfangswinkel 8a 50° bis 70°, vorzugsweise 55°
- Für die Sekundärschaufeln 4b: Schaufelanfangswinkel 8b 40° bis 60°, vorzugsweise 50°
- Für die Tertiärschaufeln 4c: Schaufelanfangswinkel 8c 50° bis 70°, vorzugsweise 60°.

Der Schaufelanfang 6 der Primärschaufeln 4b und der Tertiärschaufeln 4c ist jeweils bezogen auf die Strömung im Luftkanal 5 gegenüber dem Schaufelanfang 6 der Primärschaufeln 4a zurückgesetzt, um im Bereich des Kühllufteintrittes in den Luftkanal 5 eine möglichst große Querschnittsfläche zur Verfügung zu stellen. Die Primärschaufeln 4a sind S - förmig gekrümmt, um im Bereich des Schaufelanfangs 6 der Sekundärschaufeln 4b den Luftkanal 5 entsprechend der zu erwartenden Luftströme in zwei Teilbereiche mit möglichst großem Luftdurchsatz aufzuteilen. Die Sekundärschaufeln 4b und die Tertiärschaufeln 4c sind im Ausführungsbeispiel nur einfach bogenförmig gekrümmt.

Die Schaufelbreite 11 ist bei den Sekundärschaufeln 4b und den Tertiärschaufel 4c jeweils konstant gewählt oder nimmt vom Schaufelanfang 6 zum Schaufelende 7 hin leicht zu. Bei den Primärschaufeln 4a hingegen bildet jeweils ein am Schaufellanfang 6 angeordnetes Befestigungsauge 12 die größte Schaufelbreite 11, die dann ausgehend vom Befestigungsauge 12 zunächst abnimmt. Zum Schaufelende 7 hin kann die Schaufelbreite 11 dann wieder zunehmen. Das Befestigungsauge 12 dient zur Verbindung der Bremsscheibe 1 mit einem Bremstopf 18 (s. Fig. 1), einem Radträger o. ä. Üblicherweise wird eine Schraube 19 oder eine Hülse durch das Befestigungsauge 12 hindurch gesteckt.

Für die Festigkeit der Bremsscheibe 1 insgesamt ist es wesentlich, dass mit den Schaufeln 4 in radialer Richtung der Bremsscheibe 1 eine Überdeckung erzielt wird. Die Anordnung der Schaufeln 4 zur Erzielung der Überdeckung ist in Fig. 5 näher dargestellt. Im Ausführungsbeispiel sind zehn Primärschaufeln 4a vorgesehen, so dass zwischen zwei Primärschaufeln 4a ein Teilungswinkel 13 von 36° gebildet ist. Die Primärschaufeln 4a überdecken zu ca. 2/3 den Teilungswinkel 13; im vorliegenden Ausführungsbeispiel wird ein erster Teilungswinkel 14 von 23° durch die Primärschaufeln 4a überdeckt. Die Sekundärschaufeln 4b sind so angeordnet, dass sich entgegen der Drehrichtung D und bezogen auf den Umfangswinkel der Bremsscheibe 1 ihr Schaufelanfang 6 an das Schaufelende 7 der Primärschaufeln 4a anschließt. Die Sekundärschaufeln 4b überdecken den verbleibenden Teilungswinkel 15 von 13°.

Im Ausführungsbeispiel leisten die Tertiärschaufeln 4c keinen direkten Beitrag zur Überdeckung in radialer Richtung. Die Aufgabe der Tertiärschaufeln 4c besteht vielmehr darin, zwischen den Sekundärschaufeln 4b und den Primärschaufeln 4a die beiden Reibringe 2, 3 gegeneinander abzustützen, um eine Durchbiegung der Reibringe 2, 3 unter den durch nicht dargestellte Bremsbeläge während des Bremsvorganges axial auf die Bremsscheibe 1 aufgebrachten Kräften zu vermeiden. Hierzu sind die Schaufelenden 7 aller Schaufeln 4 am Außendurchmesser d2 im wesentlichen in gleichem Abstand angeordnet.

Im Bereich der Luftkanäle 5 sind Perforationsbohrungen 16 jeweils gegenüberliegend in den Reibringen 2 und 3 angeordnet. Die Perforationsbohrungen 16 sind innerhalb der Luftkanäle 5 in etwa parallel zu den Schaufeln 4 so angeordnet, dass sie stets einen Mindestabstand zu der in Drehrichtung D weisenden Flanke 17 der Schaufeln 4 aufweisen. In der Nähe des Innendurchmessers d1 der Bremsscheibe 1 sind keine Perforationsbohrungen 16 mehr vorgesehen.

## Patentansprüche

1. Innenbelüftete Bremsscheibe (1), bestehend aus zwei Reibringen (2, 3), die über Stege (4a, 4b) miteinander verbunden sind, wobei zwischen den Stegen Kanäle (5) zur Führung von Kühlluft gebildet sind und wobei sich die Stege zwischen ihren Endbereichen (6, 7) gekrümmt erstrecken, wobei der zum äußeren Umfangsbereich der Bremsscheibe (1) weisende Endbereich (7) der Stege (4a, 4b) im wesentlichen radial zur Bremsscheibe ausgerichtet ist und der zur inneren Umfangsseite der Bremsscheibe (1) weisende Endbereich (6) der Stege in einem Winkel von 20° bis 70°, vorzugsweise 30° bis 60°, zu einem an diesem Punkt an der Bremsscheibe angelegten, entgegen der Drehrichtung (D) der Bremsscheibe (1) weisenden Tangentenstrahl (9) angestellt ist, wobei neben primären Stegen (4a) zusätzlich sekundäre Stege (4b) vorgesehen sind, **dadurch gekennzeichnet, dass** weitere zusätzliche Stege (4c) vorgesehen sind und die inneren Endbereiche (6) der weiteren zusätzlichen Stege (4b, 4c) jeweils gegenüber dem Endbereich (6) des vorhergehenden Steges zurückgesetzt sind und die äußeren Endbereiche (7) aller Stege (4) an einem Außendurchmesser (d2) im wesentlichen in gleichem Abstand angeordnet sind.

2. Innenbelüftete Bremsscheibe (1) nach Anspruch 1, **dadurch gekennzeichnet, dass** primäre Stege (4a) und sekundäre Stege (4b) vorgesehen sind, wobei die primären Stege (4a) an ihrem inneren Endbereich (6) Befestigungsaugen (12) aufweisen.

3. Innenbelüftete Bremsscheibe nach Anspruch 1 oder 2, **dadurch gekennzeichnet, dass** die Breite der Stege (4a, 4b), die Anzahl der Stege (4a, 4b) und der Eintrittswinkel (8) so gewählt sind, dass sich die Stege (4a, 4b) in radialer Richtung der Bremsscheibe (1) gesehen überdecken.

4. Innenbelüftete Bremsscheibe nach einem der vorstehenden Ansprüche, **dadurch gekennzeichnet, dass** an den Innenseiten der Reibringe in die Kanäle (5) reichende Rippen vorgesehen sind.

5. lnnenbelüftete Bremsscheibe nach einem der vorstehenden Ansprüche, **dadurch gekennzeichnet, dass** in den Reibringen (2, 3) Perforationsbohrungen (16) vorgesehen sind, wobei im Bereich der größten statischen Druckerhöhung im Kanal (5) keine Perforationsbohrung angeordnet ist.

6. Innenbelüftete Bremsscheibe nach einem der vorstehenden Ansprüche, **dadurch gekennzeichnet, dass** die Bremsscheibe (1) aus einem faserverstärkten Verbundwerkstoff, vorzugsweise siliziuminfiltrierten kohlefaserverstärkten Kohlenstoff, besteht, wobei die Breite (16) der Stege (4a, 4b) wenigstens 10mm beträgt und der Außendurchmesser der Befestigungsaugen (12) wenigstens doppelt so groß wie deren Innendurchmesser ist.

## Claims

1. An internally ventilated brake disc (1), comprising two friction rings (2, 3) which are connected to each other by way of webs (4a, 4b), wherein ducts (5) for conveying cooling air are formed between the webs and wherein the webs extend in a curved manner between their end regions (6, 7), wherein the end region (7) of the webs (4a, 4b) directed towards the outer peripheral region of the brake disc (1) is orientated substantially radially with respect to the brake disc and the end region (6) of the webs directed towards the inner peripheral side of the brake disc (1) is set at an angle of from 20° to 70°, preferably from 30° to 60°, with respect to a tangent line (9) set against the brake disc at this point and facing in a direction opposed to the direction of rotation (D) of the brake disc (1), wherein, as well as primary webs (4a), secondary webs (4b) are additionally provided, **characterized in that** further additional webs (4c) are provided and the inner end regions (6) of the further additional webs (4b, 4c) are set back in each case with respect to the end region (6) of the preceding web and the outer end regions (7) of all the webs (4) are arranged substantially at the same interval on an external diameter (d2).

2. An internally ventilated brake disc (1) according to Claim 1, **characterized in that** primary webs (4a) and secondary webs (4b) are provided, wherein the primary webs (4a) have fixing eyelets (12) on their inner end region (6).

3. An internally ventilated brake disc according to Claim 1 or 2, **characterized in that** the width of the webs (4a, 4b), the number of the webs (4a, 4b) and the entrance angle (8) are selected to be such that the webs (4a, 4b) overlap as viewed in the radial direction of the brake disc (1).

4. An internally ventilated brake disc according to any one of the preceding Claims, **characterized in that** ribs extending into the ducts (5) are provided on the inner sides of the friction rings.

5. An internally ventilated brake disc according to any one of the preceding Claims, **characterized in that** perforation bores (16) are provided in the friction rings (2, 3), wherein no perforation bore is provided in the region of the greatest static pressure increase in the duct (5).

6. An internally ventilated brake disc according to any one of the preceding Claims, **characterized in that** the brake disc (1) consists of fibre-reinforced composite material, preferably silicon-impregnated carbon-fibre-reinforced carbon, wherein the width (16) of the webs (4a, 4b) amounts to at least 10 mm and the external diameter of the fixing eyelets (12) is at least twice as large as their internal diameter.

## Revendications

1. Disque de frein (1) à ventilation interne composé de deux anneaux de friction (2, 3) reliés entre eux par des traverses (4a, 4b), des canaux (5) pour le guidage de l'air de refroidissement étant formés entre les traverses, et lesdites traverses s'étendant en courbe entre leurs zones d'extrémité (6, 7), la zone d'extrémité (7) des traverses (4a, 4b) dirigée vers la zone circonférentielle externe du disque de frein (1) étant essentiellement orientée radialement relativement au disque de frein et la zone d'extrémité (6) des traverses dirigée vers le côté circonférentiel interne du disque de frein (1) étant appliquée suivant un angle de 20° à 70 °, préférentiellement de 30° à 60° par rapport à un rayon tangentiel (9) appliqué sur ce point du disque de frein et orienté à l'opposé du sens de rotation (D) du disque de frein (1), des traverses additionnelles secondaires (4c) étant prévues en plus des traverses primaires (4a, 4b), **caractérisé en ce que** d'autres traverses additionnelles (4c) sont prévues et **en ce que** les zones d'extrémité interne (6) des autres traverses additionnelles (4b, 4c) sont respectivement décalées vers la zone d'extrémité (6) de la traverse précédente et **en ce que** les zones d'extrémité externe (7) de toutes les traverses (4) sont disposées essentiellement avec le même espacement sur un diamètre extérieur (d2).

2. Disque de frein (1) à ventilation interne selon la revendication 1, **caractérisé en ce que** des traverses primaires (4a) et des traverses secondaires (4b) sont prévues, les traverses primaires (4a) présentant des ceils de fixation (12) sur leur zone d'extrémité interne (6).

3. Disque de frein à ventilation interne selon la revendication 1 ou 2, **caractérisé en ce que** la largeur des traverses (4a, 4b), le nombre de traverses (4a, 4b) et l'angle d'admission (8) sont choisis de manière que les traverses (4a, 4b) se chevauchent dans la direction radiale du disque de frein (1).

4. Disque de frein à ventilation interne selon l'une des revendications précédentes, **caractérisé en ce que** des nervures pénétrant dans les canaux (5) sont prévues sur les faces intérieures des anneaux de friction.

5. Disque de frein à ventilation interne selon l'une des revendications précédentes, **caractérisé en ce que** des trous de perforation (16) sont prévus dans les anneaux de friction (2, 3), aucun trou de perforation n'étant disposé dans la zone de plus grande élévation statique de pression dans le canal (5).

6. Disque de frein à ventilation interne selon l'une des revendications précédentes, **caractérisé en ce que** les disques de frein (1) sont en matériau composite renforcé aux fibre, de préférence en carbone infiltré de silicium renforcé par des fibres de carbone, la largeur (16) des traverses (4a, 4b) étant de 10 mm au moins et le diamètre extérieur des oeils de fixation (12) étant deux fois supérieur au moins à leur diamètre intérieur.
